# EUROPÄISCHE PATENTANMELDUNG

(11) **EP 0 651 176 A1**
(43) Veröffentlichungstag der Anmeldung: **03.05.1995**
(21) Anmeldenummer: 94117123.3
(22) Anmeldetag: 28.10.1994
(51) Int. Cl.: F16F 13/00

(54) **Hydraulisch dämpfendes Lager**

(30) Priorität: 02.11.1993 DE 4337383
(71) Anmelder: METZELER GIMETALL AG, D-80992 München (DE)
(72) Erfinder: Hofmann, Manfred, Dipl.-Ing., D-65597 Hünfelden (DE); Bitschkus, Horst, D-56235 Ransbach-Baumbach (DE)
(74) Vertreter: Seibert, Hannelore

(57) **Zusammenfassung**

Bei einem hydraulisch dämpfenden Lager, insbesondere Motorlager für Kraftfahrzeuge, mit einer flüssigkeitsgefüllten und von einer gummielastischen Wandung (1) umrandeten Arbeitskammer (4) und einer innerhalb der Arbeitskammer (1) an der Motorlagerplatte (2) festgelegten Panscherplatte (6) ist zur Absenkung der dynamischen Steifigkeit über einen weiten Frequenzbereich erfindungsgemäß vorgesehen, daß die Panscherplatte (6) von einem sich radial nach außen erstreckenden, elastischen Gummipolster (10) umrandet ist und daß die Resonanzfrequenz des Gummipolstersystems oberhalb dem des Panschersystems liegt.

## Beschreibung

Die Erfindung bezieht sich auf ein hydraulisch dämpfendes Lager, insbesondere Motorlager für Kraftfahrzeuge, mit mindestens einer flüssigkeitsgefüllten Arbeitskammer, die zumindest teilweise von einer angenähert hohlkegelförmigen, gummielastischen Wandung umrandet ist und in ihrem Zentrum eine Motorlagerplatte trägt, die über einen axialen Bolzen mit einem sich in der Arbeitskammer quer erstreckenden, als kreisförmige Platte ausgebildeten Panscher in Verbindung steht und bei vertikalen Schwingungseinleitungen von Flüssigkeit umströmt ist.

Ein derartiges Motorlager ist beispielsweise aus der DE 36 43 556 A1 bekannt. Durch die dabei vorgesehene Anordnung der synchron mit der Lagerplatte schwingenden Panscherplatte innerhalb des Arbeitsraumes wird zwischen dem Außenumfang dieser Panscherplatte und der Innenwandung der Arbeitskammer ein ringförmiger Überströmkanal einstellbarer Größe gebildet, mit dem bei Einleitung von Schwingungen das dynamische Verhalten des Lagers beeinflußt und insbesondere die dynamische Steifigkeit über ein weites Frequenzband abgesenkt werden kann.

Nachteilig bei dieser Anordnung ist jedoch, daß die Steifigkeit des Lagers nach der Eigenresonanz der Flüssigkeit im Spalt wieder praktisch entlang einer Geraden ansteigt.

Der vorliegenden Erfindung liegt daher die Aufgabe zugrunde, ein Lager zu schaffen, mit dem eine Absenkung der Steifigkeit auch in höheren Frequenzbereichen möglich ist, d.h. den Steifigkeitsanstieg bei einem bestimmten Wert abzuschneiden und anschließend wieder abfallen zu lassen.

Zur Lösung dieser Aufgabe ist erfindungsgemäß vorgesehen, daß die Panscherplatte von einem sich radial nach außen erstreckenden, elastischen Gummipolster umrandet ist und daß die Eigenresonanzen des Panschersystems und des Gummipolstersystems zur Absenkung der dynamischen Steifigkeit so abgestimmt sind, daß die des Panschersystems im Bereich der kritischen Drehzahlen des Motors und die des Gummipolstersystems bei einer darüberliegenden Frequenz liegen.

Mit einer solchen Anordnung eines zweiten Eigenresonanzsystems ist es auf einfache Weise möglich, den Wiederanstieg der Steifigkeit auf einen bestimmten Wert zu begrenzen und anschließend wieder absinken zu lassen.

Zweckmäßig ist es dabei, wenn die Eigenresonanz des Panschersystems im Bereich von 100 bis 250 Hz und die des Gummipolstersystems etwa 50 bis 100 Hz darüber liegt.

In konstruktiver Ausgestaltung kann das Gummipolster den Rand der Panscherplatte wulstförmig umziehen derart, daß die radiale Breite größer ist als die axiale Höhe.

Es ist aber auch möglich, daß das Gummipolster nur als dünne Lippe ausgebildet ist, die radial außen an den Rand der Panscherplatte anvulkanisiert ist.

Die Panscherplatte kann darüberhinaus mit kreisförmigen Ausnehmungen versehen ist, die vom Material des Gummipolsters membranartig ausgefüllt und überdeckt sind, um damit den Gegenschwingereffekt noch zu verstärken.

Eine weitere konstruktive Ausgestaltung besteht zweckmäßigerweise darin, daß die Panscherplatte einen zentralen, hohlen Aufsatz aufweist, der über ein umlaufendes Gummipolster an den zentralen Bolzen angelenkt ist.

Generell ist es dabei möglich, das Panscher- und Gummipolstersystem in die Arbeitskammer eines Zweikammer-Motorlagers einzubauen.

Anhand einer schematischen Zeichnung sind Aufbau und Funktionsweise von Ausführungsbeispielen nach der Erfindung näher erläutert. Dabei zeigen:
- Fig. 1: ein hydraulisches Lager mit Panscher nach dem Stand der Technik,
- Fig. 2: den Steifigkeitsverlauf eines solchen bekannten Lagers,
- Fig. 3: einen Längsschnitt durch ein Lager mit einem erfindungsgemäß ausgestalteten Panscher,
- Fig. 4: ein Diagramm über den zugehörigen Verlauf der dynamischen Steifigkeit,
- Fig. 5: einen Panscher mit einer umlaufenden Gummilippe,
- Fig. 6: einen Längsschnitt durch eine Variante einer Panscherplatte,
- Fig. 7: einen Querschnitt durch diese Panscherplatte entsprechend der Schnittlinie VII-VII nach Fig. 6 und
- Fig. 8: eine weitere Ausgestaltung einer solchen Panscherplatte.

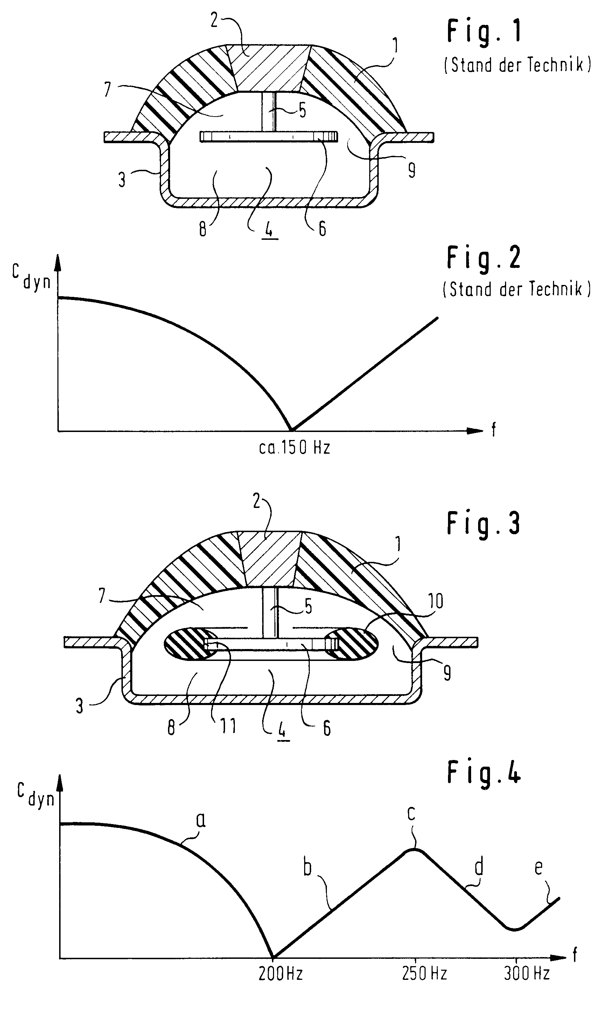

Fig. 1 zeigt einen Längsschnitt durch ein herkömmliches hydraulisch gedämpftes Motorlager mit einer Panscherplatte, das eine angenähert kegelmantelförmige Wandung 1 aus einem gummielastischen Material aufweist, die an ihrer Spitze von einer metallischen Lagerplatte 2 zur Befestigung des nicht näher dargestellten Motors abgeschlossen ist. Die Wandung 1 ist an ihrem außenliegenden Umfang an ein topfförmiges Gehäuse 3 anvulkanisiert und umschließt somit die mit Flüssigkeit gefüllte Arbeitskammer 4. Von der Lagerplatte 2 ragt nunmehr ein Bolzen 5 axial in die Arbeitskammer 4, wobei der Bolzen 5 an seinem freien Ende ein kreisscheibenförmige Panscherplatte 6 trägt.

Durch diese Panscherplatte 6 wird die eigentliche Arbeitskammer 4 in zwei Teilkammern 7 und 8 unterteilt, die über einen zwischen dem Außenumfang der Platte 6 und der Innenseite des Gehäuses 3 gebildeten ringförmigen Überströmkanal 9 miteinander in Verbindung stehen.

Bei Einleitung von Schwingungen über die Lagerplatte 2 und einer Relativbewegung von Lagerplatte 2 und Panscherplatte 6 gegenüber dem Gehäuse 3 verändern sich die beiden Teilkammern 7 und 8 in ihrem Volumen, so daß ein Flüssigkeitsaustausch zwischen den beiden Teilkammern 7 und 8 über den ringförmigen Spalt 9 stattfindet.

Durch diese Flüssigkeitsbewegung werden im Lager zusätzliche Effekte hervorgerufen, die für das dynamische Verhalten des Lagers verantwortlich sind.

Wesentlich wird durch eine solche Gestaltung die dynamische Steifigkeit des Lagers beeinflußt, wie aus dem Diagramm nach Fig. 2 zu ersehen ist. Üblicherweise fällt bei Anordnung und Wirkung einer solchen Panscherplatte die dynamische Steifigkeit des Lagers zunächst praktisch auf Null ab, während anschließend diese Steifigkeit nach Durchfahren der Eigenresonanz der Flüssigkeit im Panscherspalt 9 wieder stark ansteigt.

Eine Möglichkeit zur Vermeidung eines solchen Steifigkeitsanstieges ist nunmehr mit der vorliegenden Erfindung gefunden worden.

Danach ist bei einem Motorlager, das im Prinzip einer Gestaltung nach Fig. 1 entspricht, vorgesehen, daß die Panscherplatte 6 an ihrem Außenumfang von einem sich radial nach außen erstreckenden, elastischen Gummipolster 10 umrandet ist. Dieses Gummipolster 10 umschließt den Rand 11 der Panscherplatte 6 ringförmig, wobei zweckmäßigerweise die radiale Breite dieses wulstförmigen Gummipolsters 10 größer ist als seine axiale Höhe.

Da dieses Gummipolster 10 elastisch an die Panscherplatte 6 angekoppelt ist und auch aus einem anderen Material besteht, weist dieses Gummipolster 10 damit auch eine gesonderte Eigenfrequenz auf.

Grundsätzlich ist es bekannt, daß die von der Panscherplatte erzeugte Eigenresonanz abhängig von ihrer geometrischen Gestaltung, d.h. ihres Durchmessers und ihrer Dicke sowie der Breite des Spaltes zum Lagergehäuse, ist, so daß bei einer entsprechenden Gestaltung auch eine vorgegebene Eigenresonanz erreicht werden kann.

Mit dem neuen System ist es somit möglich, die Eigenresonanz der Panscherplatte auf die kritische Drehzahl des Motors abzustimmen und dann die Eigenfrequenz des elastischen Gummipolsters an der Panscherplatte in der Steifigkeit so abzustimmen, daß diese Eigenfrequenz die aufsteigende Steifigkeitskurve wieder abschneidet und die Steifigkeit wiederum abfällt. Dabei kann die Eigenresonanz des Gummipolstersystems zweckmäßigerweise etwa 50 bis 100 Hz über der des Panschersystems ausgelegt sein.

Ein möglicher Steifigkeitsverlauf ist in dem Diagramm nach Fig. 4 dargestellt. Durch Einstellung der Eigenresonanz des Panschersystems, beispielsweise auf eine kritische Motordrehzahl von 200 Hz, sinkt die dynamische Steifigkeit von ihrem Ausgangswert entsprechend dem Kurvenast a etwa auf Null ab, um dann stetig entsprechend dem Kurvenast b wieder anzusteigen. Durch eine entsprechende Abstimmung der Eigenresonanz des Gummipolstersystems wird dann die aufsteigende Steifigkeitskurve b etwa am Punkt c bei etwa 250 Hz abgeschnitten, um dann entsprechend dem Kurvenast d auf die Eigenresonanz des zweiten Systems im Bereich von etwa 300 Hz wieder bis gegen Null abzusinken. Erst anschließend steigt dann die Steifigkeitskurve entsprechend dem Kurvenast e unbeeinflußt wieder an.

Damit kann also erreicht werden, daß die dynamische Steifigkeit eines solchen hydraulischen Lagers über einen weiten Frequenzbereich auf niedrigen Werten gehalten werden kann, um damit insbesondere die Übertragung akustischer Schwingungen zu minimieren.

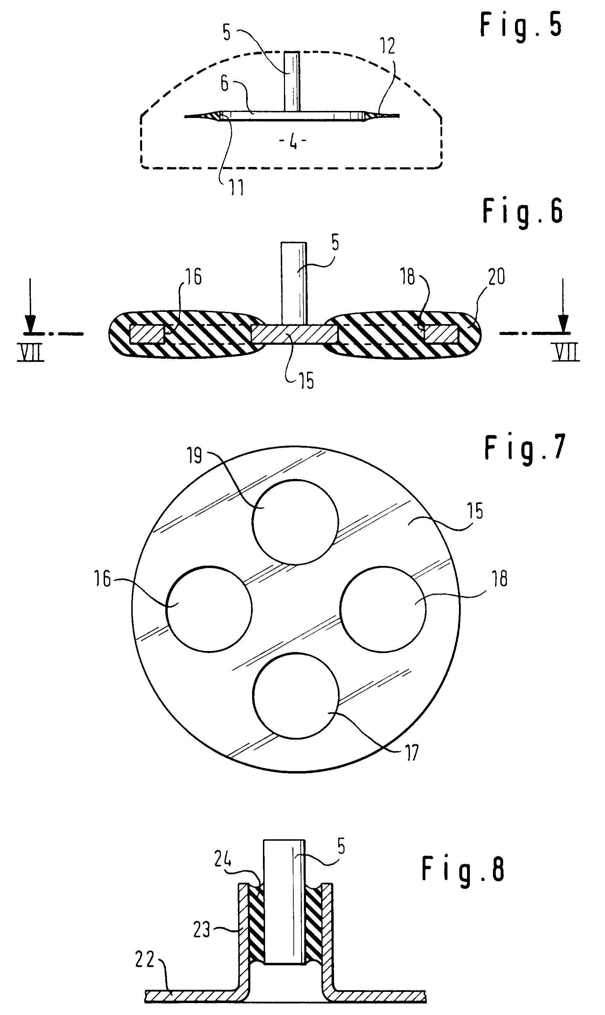

Eine andere Ausgestaltung des Gummipolsters ist in Fig. 5 gezeigt. Hierbei ist an den Rand 11 der Panscherplatte 6 nur eine dünne Gummilippe 12 anvulkanisiert, die die gleiche Aufgabe erfüllt.

Grundsätzlich ist eine beliebige Gestaltung des Gummipolsters möglich, wenn sie nur die Aufgabe einer zusätzlichen Masse mit einer gesonderten Eigenfrequenz erfüllt.

Eine weitere Gestaltungsmöglichkeit einer solchen Panscherplatte ist in den Fig. 6 und 7 dargestellt. Dabei weist die Panscherplatte 15 beispielsweise vier kreisförmige Durchbrechungen 16, 17, 18 und 19 auf und ist praktisch auf ihrer gesamten Oberfläche mit einem wulstförmigen Gummikörper 20 überzogen, der auch die Ausnehmungen 16 bis 19 ausfüllt.

Durch eine solche Gestaltung ist die gesonderte Eigenresonanz des Gummipolsters 20 besonders günstig einzustellen, da hier eine Gegenschwingung durch die in den Ausnehmungen 16 bis 19 enthaltene Gummimasse erfolgt, die somit praktisch als Membranen wirken.

Eine etwas abweichende Gestaltung ist in Fig. 8 gezeigt. Hierbei weist die Panscherplatte 22, die ringförmig, quadratisch oder rechteckig ausgebildet sein kann, einen zentralen Aufsatz 23 auf, der über ein umlaufendes Gummipolster 24 an den zentralen Bolzen 5 angelenkt ist. Bei entsprechender Dimensionierung und Härte des Gummipolsters 24 wird die Panscherplatte 22 zunächst im Takt mit dem zentralen Bolzen 5 schwingen, um die erste Steifigkeitsabsenkung zu erreichen, während dann bei höheren Frequenzen die Panscherplatte 22 phasen-verschoben oder im Gegentakt zum Bolzen 5 mit einer gesonderten Eigenfrequenz schwingt.

Bei den vorstehenden Ausführungsbeispielen ist der Einfachheit halber von einem sog. Einkammerlager ausgegangen worden, bei dem die Panscherplatte in der Flüssigkeit schwingt. In gleicher Weise und ohne Abweichung vom Grundprinzip der Erfindung ist es aber auch möglich, eine solche Anordnung in einem hydraulisch gedämpften Zweikammer-Motorlager vorzusehen, bei dem an die dargestellte Arbeitskammer über eine Drosselöffnung noch eine elastisch berandete Ausgleichskammer angeschlossen ist.

Für beide Anwendungen ist damit ein Konstruktionsprinzip gezeigt, mit dem die dynamische Steifigkeit hydraulisch gedämpfter Lager über weite Frequenzbereiche abgesenkt bzw. niedrig gehalten werden kann.

## Patentansprüche

1. Hydraulisch dämpfendes Lager, insbesondere Motorlager für Kraftfahrzeuge, mit mindestens einer flüssigkeitsgefüllten Arbeitskammer (4), die zumindest teilweise von einer angenähert hohlkegelförmigen, gummielastischen Wandung (1) umrandet ist und in ihrem Zentrum die Motorlagerplatte (2) trägt, die über einen axialen Bolzen (5) mit einem sich in der Arbeitskammer (4) quer erstreckenden, als kreisförmige Platte (6) ausgebildeten Panscher in Verbindung steht und bei vertialen Schwingungseinleitungen von Flüssigkeit umströmt ist, dadurch gekennzeichnet, daß die Panscherplatte (6; 15) von einem sich radial nach außen erstreckenden, elastischen Gummipolster (10; 12; 20) umrandet ist und daß die Eigenresonanzen des Panschersystems (6; 15) und des Gummipolstersystems (10; 12; 20) zur Absenkung der dynamischen Steifigkeit so abgestimmt sind, daß die des Panschersystems im Bereich der kritischen Drehzahl des Motors und die Gummipolstersystems bei einer darüberliegenden Frequenz liegen.

2. Hydraulisch dämpfendes Lager nach Anspruch 1, dadurch gekennzeichnet, daß die Eigenresonanz des Panschersystems (6; 15) im Bereich von 100 bis 250 Hz und die des Gummipolstersystems (10; 12; 20) 50 bis 100 Hz darüber liegt.

3. Hydraulisch dämpfendes Lager nach Anspruch 1, dadurch gekennzeichnet, daß das Gummipolster (10) den Rand (11) der Panscherplatte (6) wulstförmig umzieht derart, daß die radiale Breite größer ist als die axiale Höhe.

4. Hydraulisch dämpfendes Lager nach Anspruch 1, dadurch gekennzeichnet, daß das Gummipolster als dünne Lippe (12) ausgebildet ist, die radial nach außen an den Rand (11) der Panscherplatte anvulkanisiert ist.

5. Hydraulisch dämpfendes Lager nach Anspruch 1 oder 3, dadurch gekennzeichnet, daß die Panscherplatte (15) mit kreisförmigen Ausnehmungen (16, 17, 18, 19) versehen ist, die vom Material des Gummipolsters (20) membranartig ausgefüllt und überdeckt sind.

6. Hydraulisch dämpfendes Lager nach Anspruch 1, dadurch gekennzeichnet, daß die Panscherplatte (22) einen zentralen, hohlen Aufsatz (23) aufweist, der über ein umlaufendes Gummipolster (24) an den zentralen Bolzen (5) angelenkt ist.

7. Hydraulisch dämpfendes Lager nach einem oder mehreren der Ansprüche 1 bis 6, dadurch gekennzeichnet, daß das Panscher- und Gummipolstersystem in die Arbeitskammer eines Zweikammer-Motorlagers eingebaut ist.
